# EUROPEAN PATENT SPECIFICATION

(11) **EP 2 056 973 B1**
(45) Date of publication and mention of the grant of the patent: **12.08.2015**
(21) Application number: 07733775.6
(22) Date of filing: 25.06.2007
(51) Int. Cl.: B29C 37/00, B29C 39/10, B07B 1/46, E21B 21/06

(54) **A SCREEN ASSEMBLY FOR A VIBRATORY SEPARATOR**
SIEBANORDNUNG FÜR VIBRATIONSTRENNEINRICHTUNG
ENSEMBLE DE CRIBLAGE POUR SÉPARATEUR VIBRATOIRE

(30) Priority: 12.12.2006 US 637615
(43) Date of publication of application: 13.05.2009
(73) Proprietor: National Oilwell Varco, L.P., Houston, TX 77036 (US)
(72) Inventor: SCOTT, Eric, Conroe, Texas 77302 (US); STRONG, Gary Steven, Huntsville, Texas 77340 (US)
(74) Representative: Lucas, Brian Ronald
(86) International application number: PCT/GB2007/050354
(87) International publication number: WO 2008/072002

(56) References cited:
- WO-A-01/76719
- GB-A- 1 526 663
- US-A1- 2002 033 358
- US-A1- 2005 103 689

## Description

This invention relates to a screen assembly for a vibratory separator, a support for use in a screen assembly and a vibratory separator comprising a screen assembly. The invention particularly, but not exclusively, relates to a screen assembly for use in a shale shaker for separating solids from a solids laden drilling mud.

Vibratory separators are used in a wide variety of industries to separate materials such as liquids from solids or solids from solids. Typically such separators have a basket or other screen holding or mounting apparatus mounted in or over a receiving receptacle or tank and vibrating apparatus for vibrating the basket and thus the screen. One or more screens are mounted in the basket. Material to be treated is introduced to the screen(s) from above either by flowing it directly onto the screen(s) or by flowing it into a container, tank, or "possum belly" from which it then flows on to the screen(s). Also in some multi-screen apparatuses material flows generally horizontally or uphill from one screen to another and, in certain systems, from an upper screen onto a lower screen which may have the same grade screen or of a finer grade.

In the drilling of a borehole in the construction of an oil or gas well, a drill bit is arranged on the end of a drill string and is rotated to bore the borehole. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as those shale shakers disclosed in US 5,265,730, WO 96/33792 and WO 98/16328.

Shale shakers generally comprise an open bottomed basket having one open discharge end and a solid walled feed end. A number of rectangular screens are arranged in the basket held in C-channel rails located on the basket walls, such as those disclosed in GB-A-2,176,424. The basket is arranged on springs above a receptor for receiving recovered drilling mud. A skip or ditch is provided beneath the open discharge end of the bosket. A motor is fixed to the basket, which has a drive rotor provided with an offset clump weight. In use, the motor rotates the rotor and the offset clump weight, which causes the basket and the screens fixed thereto to shake. Solids laden mud is introduced at the feed end of the basket on to the screens. The shaking motion induces the solids to move along the screens towards the open discharge end. Drilling mud passes through the screens. The recovered drilling mud is received in the receptor for further processing and the solids pass over the discharge end of the basket into the ditch or skip.
The screens are generally of one of two types: hook-strip; and pre-tensioned.

The hook-strip type of screen comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. The supporting mesh may be provided with or replaced by a panel having apertures therein.

The pre-tensioned type of screen comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen is then inserted into C-channel rails arranged in a basket of a shale shaker. An example of this type of screen is disclosed in GB-A-1,578,948.

A further example of a known rigid support is disclosed in US 5 699 918 A or in PCT Publication No. WO 01/76719, which disclose, amongst other things, flat panels like portion having apertures therein and in WO 01/76719 wing portions which are folded to form a support structure, which may be made from a single sheet of material. This rigid support has been assigned the Trade Mark "UNIBODY" by the applicants.

The layers of mesh in the screens wear out frequently and therefore need to be easily replaceable. Shale shakers are generally in the order of 5ft wide and 10ft long. A screen of dimensions 5ft wide by 10ft long is difficult to handle, replace and transport. It is known to use two, three, four or more screens in a single shale shaker. A standard size of screen currently used is of the order of 4ft by 3ft.

### Description of Related Art

Many typical vibratory separators and shale shakers have a container, carrier, housing, or basket to which is secured one or more screens or screen assemblies used for separating components of material fed to the vibratory separator or shale shaker. Vibrating apparatus vibrates the container and the vibrations are imparted to the screen(s) or screen assemblies secured to the container; or vibrating apparatus vibrates the screen(s) directly. Typically it is desirable to maximize vibration of the screen(s) while isolating equipment, objects, and structures adjacent the vibratory separator from the intense vibrations produced by the vibrating apparatus.

Often shale shakers are used offshore on rigs over salt water. Both the salt environment and the chemicals in drilling fluids processed by the shale shakers can contribute to the deterioration of screen assemblies.

There has long been a need, recognized by the present inventors, for a screen assembly for a vibratory separator and shale shaker which is durable; resistant to harsh environments and chemicals; provides effective screening over a temperature operation range; and is relatively light weight and easy to handle.

According to the present invention there is provided a screen assembly for use in a vibratory separator for screening a solids laden fluid, the screen assembly comprising a support made of composite material and at least one layer of screening material on the support, the support having a top and a bottom and a plurality of holes therethrough from the top to the bottom through which fluid is passable, the holes defined by structure of the support characterised in that the structure defining the holes tapers between the top and the bottom of the support. Preferably, the holes are defined by structural elements of the support. The composite material may comprise reinforcing bars. The reinforcing bars may be made of steel, aluminium or any other suitable material. The reinforcing bars may be wholly embedded in a fibreglass or plastics material or any other material disclosed herein.

Preferably, the at least one of the holes of the plurality of holes has a shape in plan view of: square, rectangular, trapezoidal, hexagonal, triangular, pentagonal, heptagonal, octagonal and diamond.

Advantageously, the structure defining the holes is narrower at the top than at the bottom of the support, preferably, such that the holes are wider and have a larger opening area at the top than at the bottom.

Preferably, the structure defining the holes is narrower at the bottom than at the top of the support, advantageously, such that the holes are narrower and have a smaller opening area at the top than at the bottom. Preferably, the tapering is substantially continuous between the top and the bottom.

Advantageously, the support has two spaced-apart sides. Preferably, each hole of the plurality of holes has a vertex. Advantageously, each side of the two spaced-apart sides has a series of spaced-apart ribs. Preferably, the series of spaced apart ribs supports a plate. Preferably, the plate above the ribs is solid and impervious to fluid flow, advantageously having no holes therein. Advantageously, the ribs are located in an area, in which in use a screen assembly clamping means clamps the screen assembly in a vibratory separator. Preferably, the vertex points toward a side of the support, and preferably, a rib of the series of spaced-apart ribs contacts each vertex.

Advantageously, at least one base member at a bottom of the structure defining the holes, the base member wider than the bottom of the structure defining the holes. Preferably, the at least one base member is a plurality of base members spaced-apart across the bottom of the support. Advantageously, the at least one base member extends under a rib on each side of the support, the base member wider than the rib. Preferably, the support has two spaced-apart ends, and the base members are substantially parallel to the two spaced-apart ends.

Preferably, the support has two spaced-apart ends, andeach of the ends comprises two spaced-apart connected-together end members. Advantageously, the two spaced-apart connected-together end members comprise a first end member and a second end member, the first end member having at least one amount of releasably cooperating fastener material thereon, the second end member having at least one hole corresponding in position to the at least one amount of releasably cooperating fastener material, and part of the at least one amount of releasably cooperating fastener material projecting through the at least one hole.

Advantageously, the at least one layer of screening material is a plurality of layers of screening material. Preferably, the screen assembly further comprises a perforate plate on the support, and the at least one layer of screening material on the perforate plate. Preferably, the perforate plate is adhered to the support. Advantageously, the at least one layer of screening material is connected to the perforate plate. Preferably, the perforate plate is made of composite material. Preferably, the perforate plate is made of a metal, such as steel or aluminium.

Advantageously, the support of composite material comprises 35% to 40% NYLON 66 (Trademark) material and 60% to 65% glass reinforcing material. Preferably, the support of composite material comprises 6,6 NYLON (Trademark) material and 60% to 65% glass reinforcing material Advantageously, the support of composite material comprises 35% to 40% NYLON 66 (Trademark) material and 60% to 65% glass reinforcing material and at least one mineral. Preferably, the mineral is quartz. Advantageously, the support of composite material comprises polyphenylene sulphide and carbon fibres.

The present invention also provides a shale shaker for separating solids from solids laden drilling fluid, the shale shaker comprising a screen assembly of the present invention.

The present invention also provides A method for separating solids from a solids laden fluid with a vibratory separator, the method comprising the steps of introducing solids laden fluid to the vibratory separator, the vibratory separator having a base, a basket, at least one screen assembly connected to the basket, vibration apparatus for vibrating the basket and the at least one screen assembly, the at least one screen assembly comprising a support and at least one layer of screening material on the support, the support made of composite material, the support having a top and a bottom and a plurality of holes therethrough from top to bottom through which material is passable, the holes defined by structure of the support, the structure defining the holes having a top and a bottom and tapering therebetween to define tapering holes and vibrating the screen assembly to separate solids from the solids laden fluid, whereupon the at least the fluid element passes through the at least one layer of screening material and the tapering holes.

Advantageously, the structure defining the holes is narrower at the top than at the bottom of the support, preferably, such that the holes are wider and have a larger opening area at the top than at the bottom.

Preferably, the structure defining the holes is narrower at the bottom than at the top of the support, advantageously, such that the holes are narrower and have a smaller opening area at the top than at the bottom. Preferably, the tapering is substantially continuous between the top and the bottom.

Preferably, the solids laden fluid is drilling mud with drilled cuttings and the vibratory separator is a shale shaker.

Thus the invention provides a screen assembly for a vibratory separator or shale shaker in which a frame, panel or support for screening material of the screen assembly is made of composite material. "Composite Material" means a plastic or resin material with reinforcing material (e.g. fibers, fibrils, pieces, strands, and/or powder) which is of a material of desired strength (e.g., but not limited to, carbon, fiberglass, plastic, metal, or mineral glass).

In certain particular aspects such a frame, panel or support is made of such a composite material with an effective stiffness which is maintained over a particular temperature range.

Separators and shakers according to certain aspects of the present invention with a screen assembly or assemblies in accordance with the present invention are useful for treating drilling fluid with drilled cuttings, debris, etc. therein. In one particular aspect such a screen assembly or assemblies are effective over a temperature range from ambient temperature to about 90°C.

For a better understanding of the present invention, reference will now be made, by way of example, to the accompanying drawings, in which:
Figure 1A is a top view of a screen assembly in accordance with the present invention;
Figure 1B is a exploded side view of the screen assembly shown in Figure 1A;
Figure 2 is a perspective view of a screen support for a screen assembly in accordance with the present invention, viewed from underneath;
Figure 3A is a perspective view of a screen support for a screen assembly in accordance with the present invention, viewed from underneath;
Figure 3B is a bottom view of the screen support shown in Figure 3A;
Figure 3C is an end view of the screen support shown in Figure 3A;
Figure 3D is a side view of the screen support shown in Figure 3A;
Figure 3E is a perspective view of the screen support shown in Figure 3A, viewed from above;
Figure 3F is a side view in cross-section of a part of a screen assembly in accordance with the present invention;
Figure 3G is a side view in cross-section of a part of a screen assembly in accordance with the present invention;
Figure 3H is a side view in cross-section of a part of a screen assembly in accordance with the present invention;
Figure 4 is a perspective view of a shale shaker with a screen assembly in accordance with the present invention;
Figure 5A is a top view of a screen assembly in accordance with the present invention;
Figure 5B is an exploded side view of the screen assembly shown in Figure 5A.
Figure 6A is a side schematic view showing a mold and a step in a method of using it to make part of a screen assembly in accordance with the present invention;
Figure 6B shows a further step in the method;
Figure 6C shows a yet further step on the method;
Figure 6D is an end view of a screen assembly in accordance with the present invention made by the method;
Figure 6E is a view in cross-section view of a screen assembly in accordance with the present invention made by the method;
Figure 7 is a perspective view of a screen support in accordance with the present invention, viewed from underneath;
Figure 8 is a perspective view of a screen support in accordance with the present invention, viewed from underneath;
Figure 9 is a perspective view of a screen support in accordance with the present invention, viewed from underneath;
Figure 10 is a top view of opening shapes for a support in accordance with the present invention;
Figure 11A is a perspective view of a screen support in accordance with the present invention, viewed from underneath;
Figure 11B is an end view of an end member of the screen support shown in Figure 11A;
Figure 11C is a top view of the end member shown in Figure 11B, with parts indicated in dotted lines to clarify a part of the end of the screen support; and
Figure 11D is an end view of an end member of the screen shown in Figure 11A.

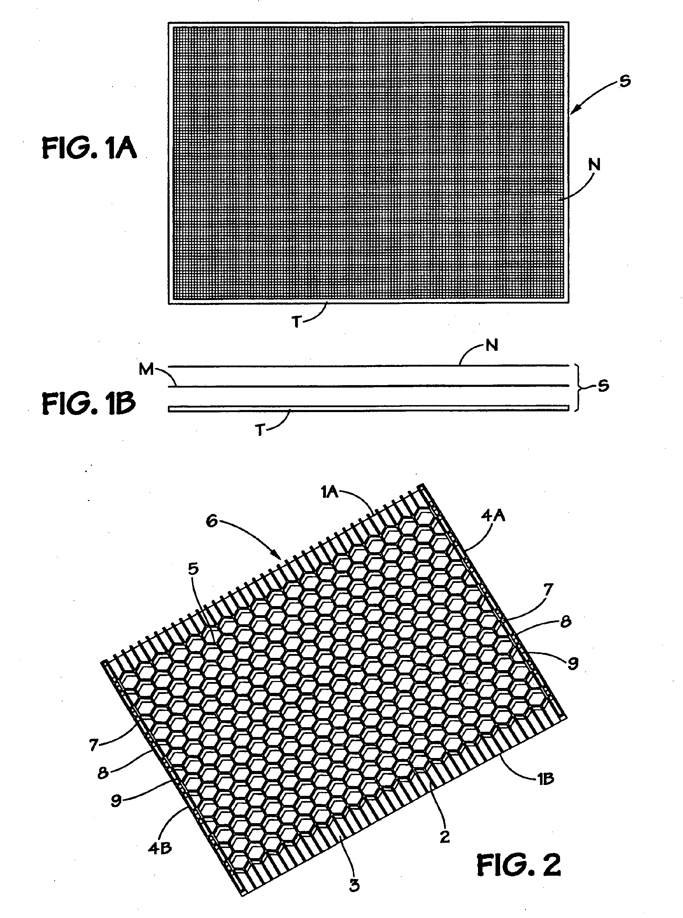

Figures 1A and 1B show a screen assembly S which has a screen support T to which are secured two layers of screening material M and N. The screen support T may be any in accordance with the present invention.

Any two known layers of screening material, which may be flat, planar or having raised portions therein, undulating or other three dimensional elements may be used for the layers M, N; and either layer may be deleted. Optionally, a third and/or a fourth layer of screening material (any known) may be used. Any layers may be connected together and/or connected to the screen support T in any known way.

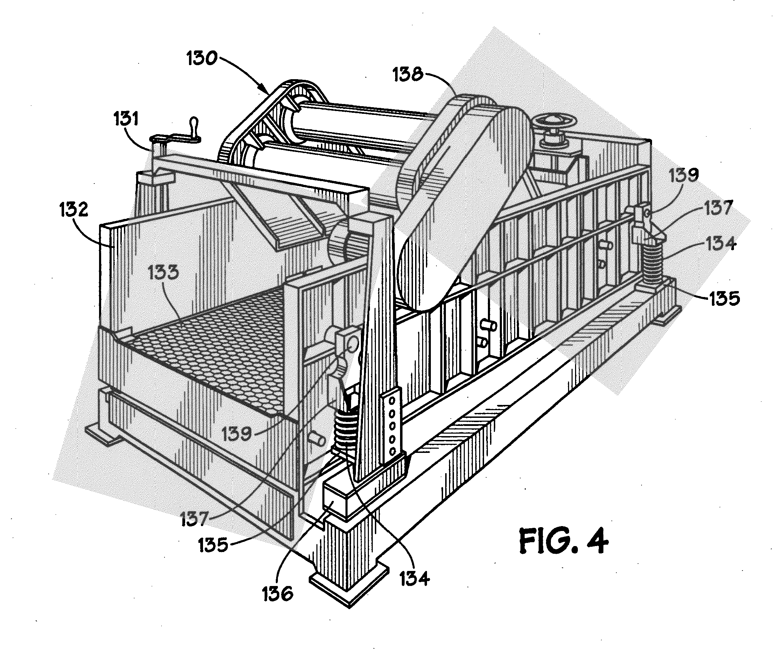

Figure 4 shows a shale shaker 130 in accordance with the present invention which has a screen assembly 133 in accordance with the present invention, mounted in a basket 132. Between basket mount members 137 and mount members 135 on a frame 136 are mounted springs 134 for isolating vibration of the shale shaker 130. Vibrating apparatus 138 vibrates the basket 132 to vibrate the screen apparatus 133. Elevator apparatus 131 provides for raising and lowering of the basket end. Posts 139 secured to the basket 132 extend through corresponding holes in the mount members 137. The screen apparatus 133 may be used with any suitable known shaker or vibratory separator.

One specific composite material useful for a frame, panel or support in accordance with the present invention is, by weight 35% to 40% NYLON 66 (Trademark) material or 6,6 NYLON (Trademark) material and 60% to 65% glass reinforcing material (or 60% to 65% glass reinforcing material plus minerals, e.g., quartz. In another aspect, instead of NYLON 66 (Trademark) material, polyphenylene sulphide is used with carbon fibres. Openings in the frame, panel or support may be any desired shape, e.g., but not limited to square, rectangular, trapezoidal, hexagonal, triangular, or diamond.

Figure 2 shows a screen support 6 made of plastic or of composite material in accordance with the present invention which has a plurality of fluid flow openings 5 through a body 3. Bars 2 extend to edges 1A, 1B of the body 3. Ends 4A, 4B of the body 3 each have spaced-apart members 8, 9 which extend from one side of the body 3 to the other. Ribs 7 extend between and are connected to the members 8, 9.

In accordance with the present invention the ribs 7 may be of any desired number and may be spaced-apart any desired distance along the length of the members 8, 9. In one aspect, as shown, each rib 7 abuts a vertex of one of the openings 5, as does each bar 2, with every other bar 2 being shorter than adjacent bars 2. With the members 8, 9 the ends are strengthened. Fasteners and/or fastener material may be connected to the members 8 to connect two screen supports 6 together.

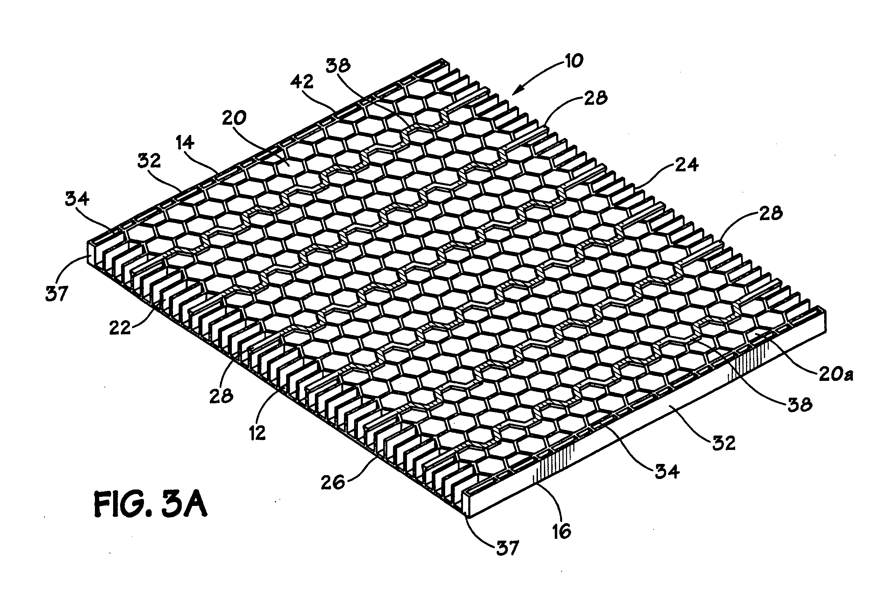

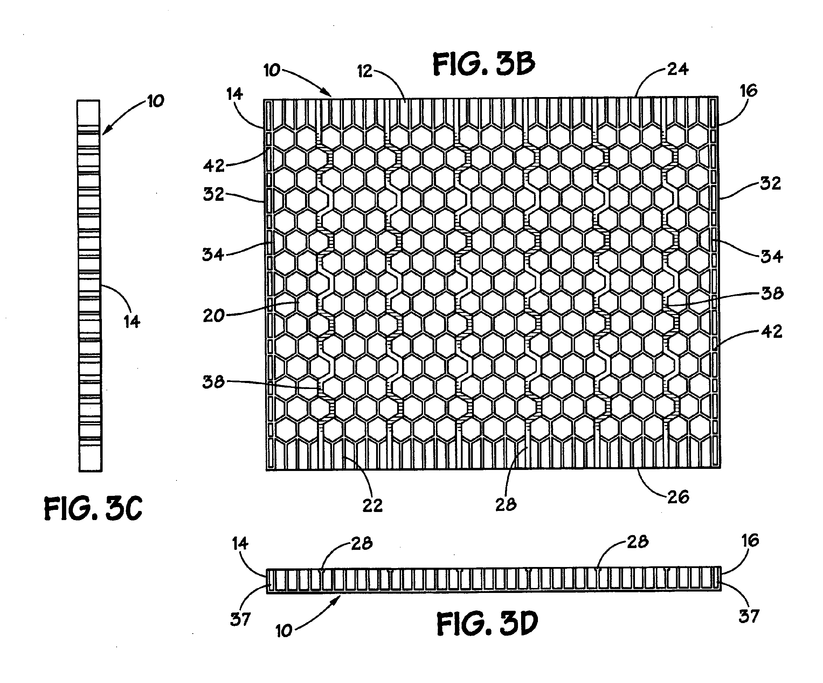

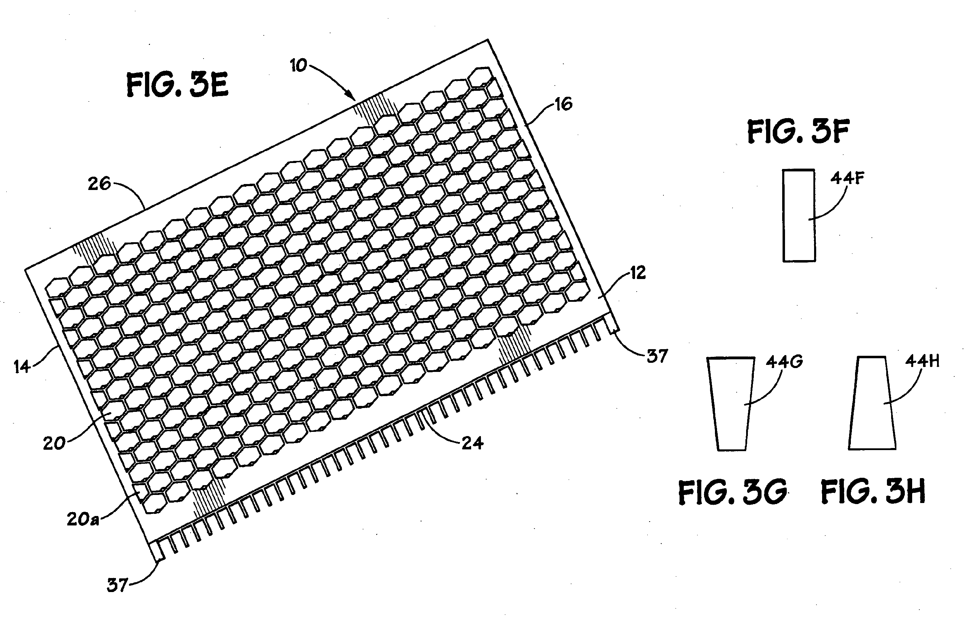

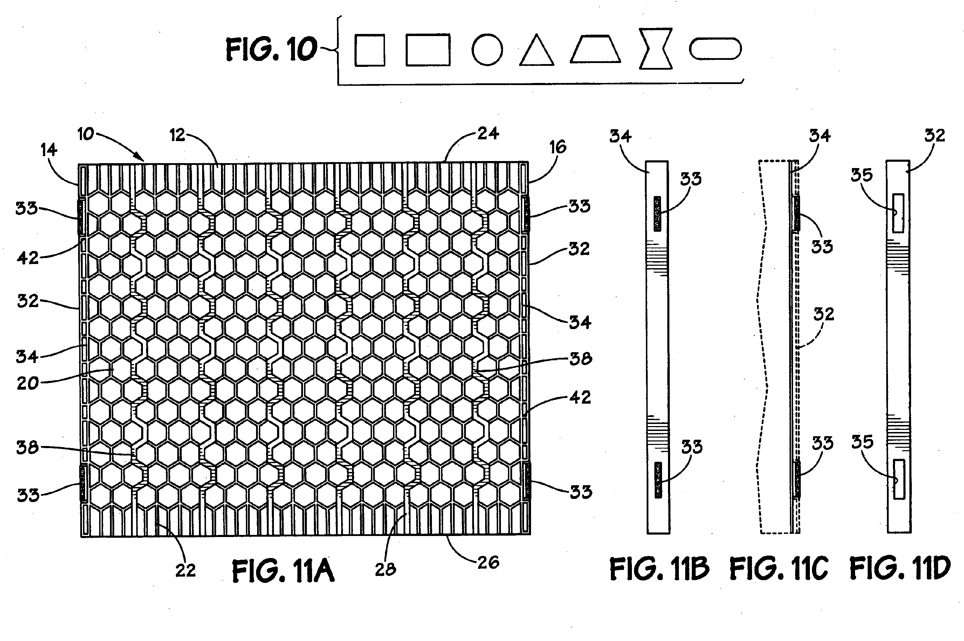

Figures 3A to 3E show a screen support 10 in accordance with the present invention (which may be used as the screen support for a screen assembly in accordance with the present invention as in Figure 1A or Figure 4). The screen support 10 has a body 12 with ends 14, 16 spaced-apart by sides 24, 26. The body 12 has a plurality of fluid flow openings 20 therethrough which may be any desired shape and size, but which are shown as generally hexagonal when viewed from above. Some of the openings 20a at ends of the body are half the size of the openings 20. Optional opening shapes (for the screen support 10 and for any screen support in accordance with the present invention) - as viewed from above - are shown in Figure 10.

Bars 22 (optional) on the sides 24, 26 strengthen the support 10, enhance stiffness and extend from the outer part of openings 20 to the edges of the sides 24, 26. Optionally certain of the bars 22 have a base 28. Any bar 22 may have a base 28; or any set of bars smaller than the set of all the bars; or every other bar or every third bar.

Each end 14, 16 of the body 12 has two members 32, 34 spaced-apart by optional ribs 42. The end portions of the members 32, 34 may have an opening therebetween or as shown may be closed off with members 37.

As shown in Figure 3C, optionally parts of certain of pieces defining the openings 20 have a base 38 and, with the bases 28, a continuous base piece is formed which extends across the width of the screen assembly 10, strengthening it and enhancing stiffness.

It is within the scope of the present invention for the width of parts of the body 12 which define the openings 20 to be uniform from top to bottom (as shown by part 44F in Figure 3F); wider at the top than the bottom (see part 44G, Figure 3G) ; or, as shown by the part 44H in Figure 3H, to be wider at the bottom than the top. In certain aspects, select openings or all openings of select areas of a screen support will have wider portions at top or bottom of openings (e.g. in one particular aspect the openings taper from top to bottom, from narrower to slightly wider, e.g. with a 0.5 taper). In certain embodiments at a point or points of fluid stream impact onto a screen assembly, or at an exit end of a screen assembly or shaker or separator, or at areas of relatively high flow, parts 44 are like part 44G, Figure 3G, and/or each opening has one, two, or more sides with a base like the base 38.

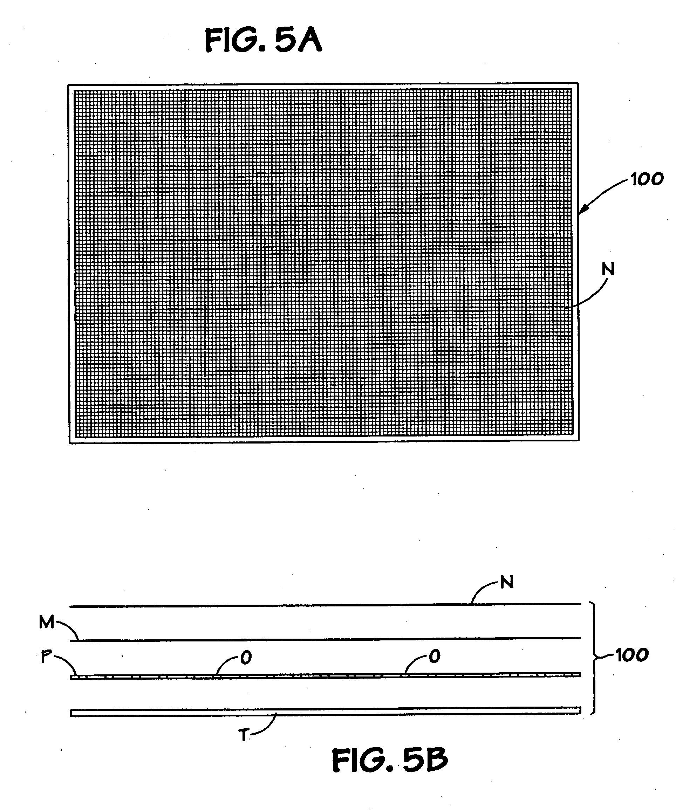

Figures 5A and 5B show a screen assembly 100 (like the screen assembly S, Figures 1A, 1B; like letters indicate like parts). Between the layers M, N of screening material is a perforate plate P with a plurality of fluid flow openings O (e.g. any known perforate plate used in known screen assemblies). Optionally, the plate P is placed on the support T and connected and/or adhered (collectively referred to as "secured" together) thereto by any known way in which such a plate is connected and/or adhered to an item beneath the plate. In one particular aspect the plate P is placed with material to form the support T during the making of the support T.

Screen cloth or wire on a plate or support is tensioned as is done by well-known methods and processes.

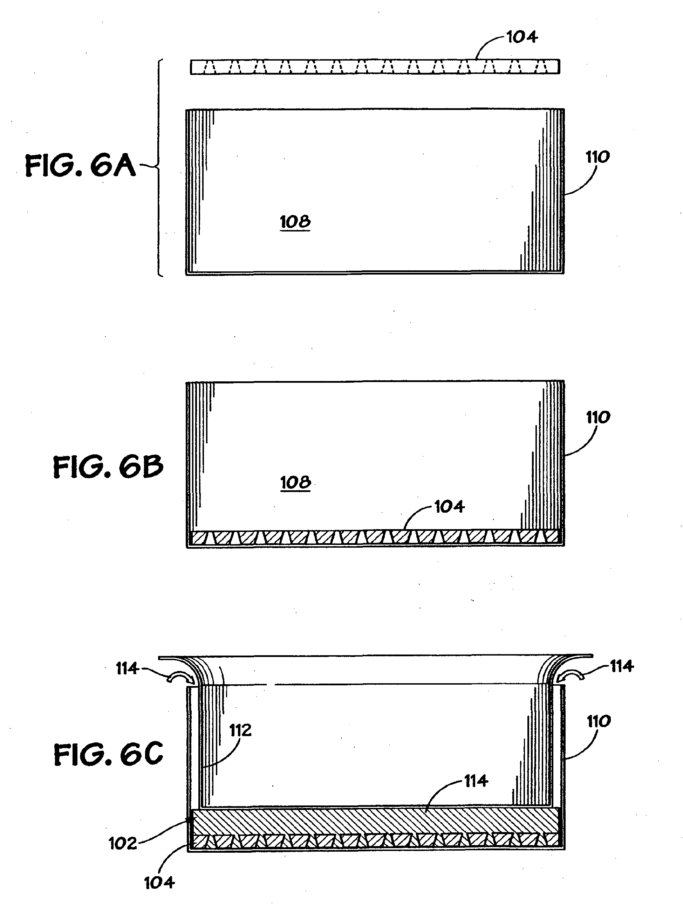

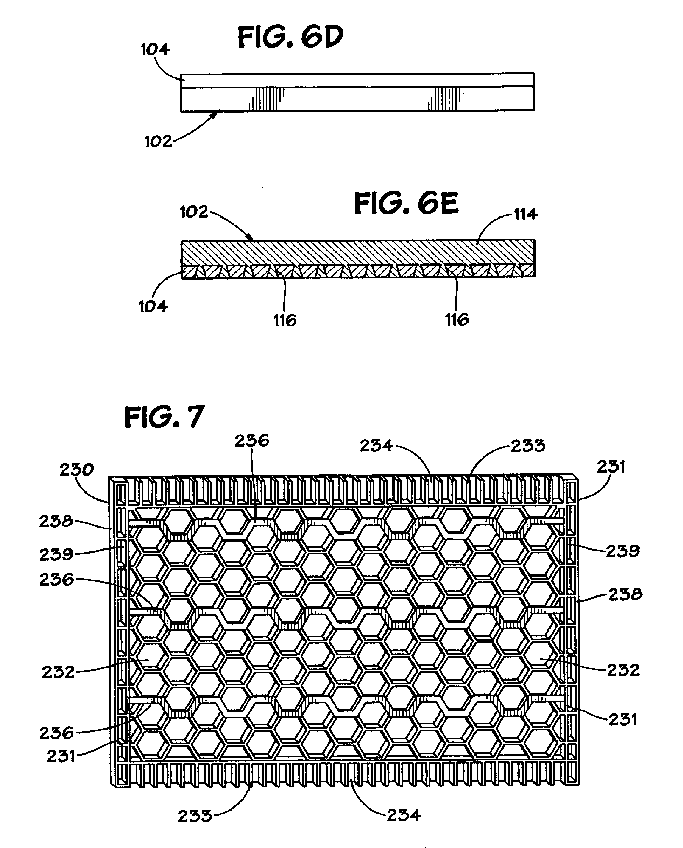

Figures 6A to 6D illustrate a method for making a screen assembly 200 in accordance with the present invention which has a support 102 in accordance with the present invention, a perforate plate 104, and screening material (not shown) secured to the perforate plate 104. The screening material (not shown) may be any screening material layer or layers referred to or disclosed herein.

The perforate plate 104 is placed in a mold cavity 108 of a mold 110. Then a die plate 112 is placed in the mold cavity 108 spaced apart from the perforate plate 104. Flowable composite material 114 is then introduced into the mold cavity (see Figure 6C) onto the perforate plate 104. The composite material 114 solidifies and adheres to the perforate plate 104.

After the plate-composite combination is removed from the mold cavity 108, the screening material (not shown) is connected to the perforate plate 104 (e.g. by glue, epoxy, adhesive, connectors, fasteners, sewing and/or sintering).

Optionally, as shown in Figure 6E, openings 116 (of any desired shape, size, number and configuration) may be provided in the perforate plate 104 into which composite material 114 flows and then in which the material 114 solidifies to secure the composite material 114 to the perforate plate 104. Any size or shape openings may be used through the perforate plate 104 and through the support 102.

Figure 7 shows a support 230 according to the present invention which has end members 238, 239 (like the members 8, 9). The end member 239 abuts vertices of hex-shaped openings 232 rather than flat sides of such openings. Base members 236 (like the bases 28, 38) extend from one end of the support 230 to the other. Bars 233 (like the bars 2) are below a body 234 (like the body 3). Ribs 231 are between the members 238, 239 and are spaced evenly with the vertices of the hex-shaped openings 232.

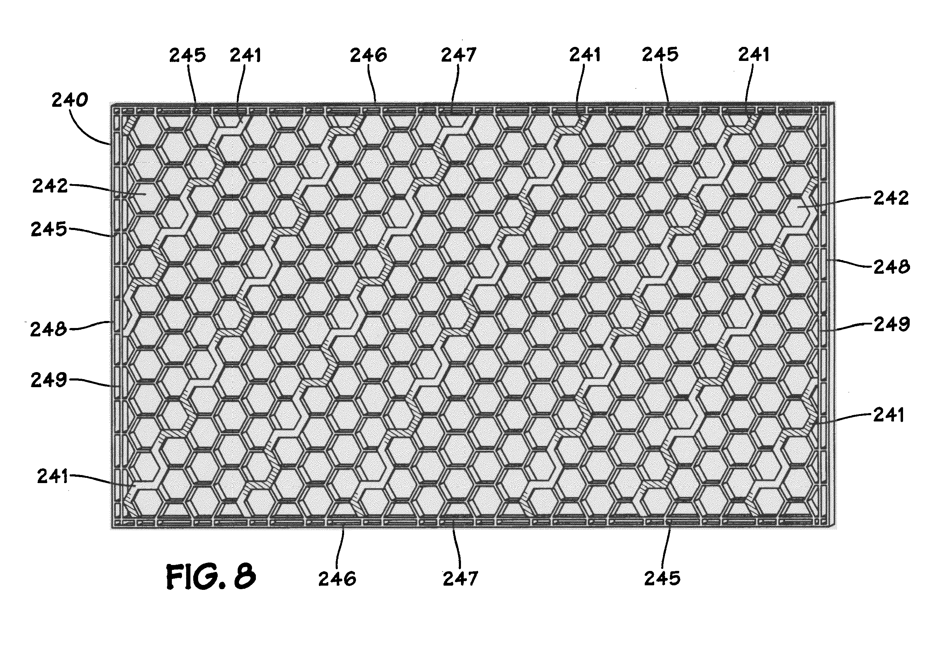

Figure 8 shows a support 240 in accordance with the present invention with openings 242 like other supports disclosed herein, but with bases 241 extending at an angle across the support, as viewed from above (any desired angle) and with side members 246, 247 like end members 248, 249 (like end members 238, 239). Ribs 245 are between the members 244, 247 and 248, 249.

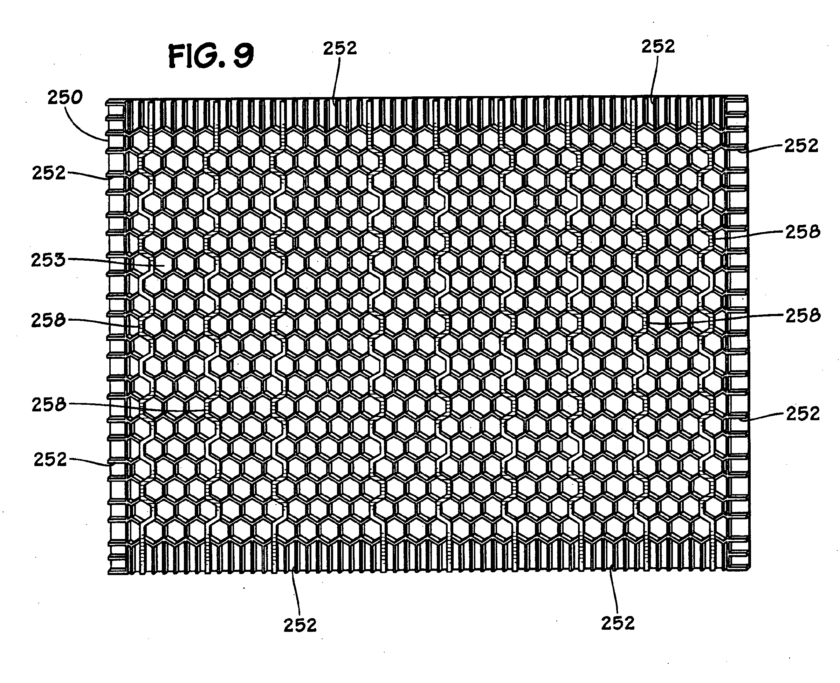

Figure 9 shows a support 250, like the support of Figure 3A, but with no end members (like the end members 32, 34) and with a series of spaced-apart bars 252 (like the bars 2 or 22) around the supports entire lower periphery. Optionally, bases 258 extend from one side to the other of the support 250 adjacent openings 253.

Figure 11A shows an alternative version of a screen 10 as shown in Figure 3B. As shown in Figure 11A, the end member 34 has amounts 33 of releasably cooperating hook-and-loop fastener material secured thereto. Part of these amounts project through corresponding holes 35 in the end member 32 (see Figures 11B - 11D). These amounts 33 of the releasably cooperating hook-and-loop fastener material are positioned for releasable mating with corresponding amounts of such material on an adjacent screen assembly or on part of a screen support or shaker basket. Such amounts of material may be used on any end member disclosed herein adjacent any end member disclosed herein with holes (like the holes 35). A sufficient amount of material 33 projects through the holes 35 so that a screen with the screen support as shown in Figure 11A can be effectively and releasably connected to an adjacent screen assembly or to another item; and the holes 35 make it possible for two such adjacent connected screens to abut each other without the interconnected releasably cooperating hook-and-loop fastener material preventing their contact and sealing abutment. It is within the scope of this invention to use one or more than two amounts 33 (with a corresponding hole or holes).

"Composite" material as used herein includes, but is not limited to, the composite materials including resin or plastic or fibreglass or glass referred to in U.S. Patents 6,335,101; 6,346,425; 6,352,779; 6,343,038; 6,355,206; 6,355,358; 6,361,860;. 6,324,833; 6,324,833; and 6,358,603 and in the references cited in these patents - all fully incorporated here for all purposes. It is within the scope of the present invention to use for a part for a shale shaker (parts listed or mentioned above in accordance with the present invention) a composite material with reinforcing wires, bars, cables, pieces, plates, rods and/or discs which are metal, wood or plastic and with and/or within a matrix of cement, fibreglass, and/or plastic, including, but not limited to, as disclosed in U.S. Patent 6,358,603 and in the references referred to in this patent, all of which are incorporated fully herein for all purposes.

Any support in accordance with the present invention with openings larger at a top of the support than at the bottom of the support and/or with structure defining the openings which taper from top to bottom (narrower to wider, or wider to narrower) and/or with a base member or base members across the support may be made of plastic, metal (e.g. aluminium, aluminium alloy, steel, stainless steel), resin, fibreglass, and/or a combination of these materials.

The present invention in at least, but not necessarily all, embodiments, therefore, provides a screen assembly for a vibratory separator or a shale shaker with a screen support made of composite material.

The present invention, therefore, in at least certain, but not necessarily all, embodiments, provides a screen assembly for use in a vibratory separator or shale shaker in which the screen assembly is subjected to vibratory forces sufficient to facilitate the separation of materials introduced onto the screen assembly, the screen assembly including: a support, the support made of composite material; the support having a top and a bottom and a plurality of holes therethrough from top to bottom through which material is passable, the holes defined by structure of the support, the structure defining said holes having a top and a bottom and tapering from the top to the bottom of the support and narrower at the top than at the bottom of the support or narrower at the bottom than at the top of the support; and at least one layer of screening material on the support. Such a screen r assembly may have one or some, in any possible combination, of the following: the support having two spaced-apart sides, and each side of the two spaced-apart sides having a series of spaced-apart ribs; wherein each hole of the plurality of holes having a vertex pointing toward a side of the support, and wherein a rib of the series of spaced-apart ribs contacts each vertex; at least one base member at a bottom of the structure defining the holes, said base member wider than the bottom of the structure defining the holes; wherein the at least one base member is a plurality of base members spaced-apart across the bottom of the support; wherein the support has two spaced-apart sides, and each side of the two spaced-apart, sides has a series of spaced-apart ribs, and wherein the at least one base member extends under a rib on each side of the support, the base member wider than the rib; wherein the support has two spaced-apart ends, and the base members are parallel to the two spaced-apart ends; the support has two spaced-apart ends, and each of said ends comprising two spaced-apart connected-together end members; wherein the at least one layer of screening material is connected to the support; wherein the at least one layer of screening material is a plurality of layers of screening material; a perforate plate on the support, and the at least one layer of screening material on the perforate plate; wherein the perforate plate is adhered to the support; wherein the at least one layer of screening material is connected to the perforate plate; and/or wherein the perforate plate is made of composite material.

The present invention, therefore, in at least certain, but not necessarily all, embodiments, provides a screen assembly for use in a vibratory separator or shale shaker in which the screen assembly is subjected to vibratory forces sufficient to facilitate the separation of materials introduced onto the screen assembly, the screen assembly including: a support, the support made of composite material; the support having a top and a bottom and a plurality of holes therethrough from top to bottom through which material is passable, the holes defined by structure of the support, the structure defining said holes having a top and a bottom and tapering from the top to the bottom of the support and narrower at the top than at the bottom of the support, or narrower at the bottom than at the top; at least one layer of screening material on she support; the support having two spaced-apart sides; each side of the two spaced-apart sides having a series of spaced-apart ribs; at least one base member at a bottom of the structure defining the holes, said base member wider than the bottom of the structure defining the holes; wherein the at least one base member is a plurality of base members spaced-apart across the bottom of the support; wherein the support has two spaced-apart sides, and each side of the two spaced-apart sides has a series of spaced-apart ribs, and wherein the at least one base member extends under a rib on each side of the support, the base member wider than the rib; a perforate plate on the support; and the at least one layer of screening material on the perforate plate.

The present invention, therefore, in at least certain, but not necessarily all, embodiments, provides a screen assembly for use in a vibratory separator or shale shaker in which the screen assembly is subjected to vibratory forces sufficient to facilitate the separation of materials introduced onto the screen assembly, the screen assembly including: a support, the support made of composite material; the support having a top and a bottom and a plurality of holes therethrough from top to bottom through which material is passable, the holes defined by structure of the support, the structure defining said holes having a top and a bottom and tapering from the top to the bottom of the support and narrower at the top than at the bottom of the support; at least one layer of screening material on the support; and at least one base member at a bottom of the structure defining the holes, said base member wider than the bottom of the structure defining the holes.

The present invention, therefore, provides in at least certain embodiments, methods for treating material with a vibratory separator or shale shaker, the methods including introducing fluid to be treated to the vibratory separator, the vibratory separator having a base, a basket, at least one screen assembly connected to the basket, vibration apparatus for vibrating the basket and the at least one screen assembly wherein said at least one screen assembly is a screen assembly in accordance with the present invention, and processing said fluid with the vibratory separator; and, in certain aspects, wherein said fluid includes drilling fluid and drilled cuttings and said vibratory separator is a shale shaker.

## Claims

1. A screen assembly for use in a vibratory separator for screening a solids laden fluid, the screen assembly comprising a support (6) made of composite material and at least one layer of screening material (M,N) on said support, said support (6) having a top and a bottom and a plurality of holes (5) therethrough from said top to said bottom through which fluid is passable, said holes (5) defined by structure of the support (6) **characterised in that** said structure defining said holes (5) tapers between said top and said bottom of said support (6).

2. A screen assembly as claimed in Claim 1, wherein the at least one of the holes of said plurality of holes (5) has a shape in plan view of: square, rectangular, trapezoidal, hexagonal, triangular, and diamond.

3. A screen assembly as claimed in Claim 1 or 2, wherein said structure defining said holes (5) is narrower at said top than at said bottom of the support (6).

4. A screen assembly as claimed in Claim 1 or 2, wherein the structure defining the holes (5) is narrower at the bottom than at the top of the support (6).

5. A screen assembly as claimed in any preceding claim, wherein the support (6) has two spaced-apart sides (1A.1B) preferably, each side of the two spaced-apart sides (1A,1B) has a series of spaced-apart ribs (2) advantageously, said vertex points toward a side (1A,1B) of the support (6).

6. A screen assembly as claimed in any preceding claim further comprising at least one base member (28) at a bottom of the structure defining the holes (5), said base member (28) wider than the bottom of the structure defining the holes (5).

7. A screen assembly as claimed in Claim 6 in combination with Claim 3, wherein the at least one base member (28) extends under a rib (2) on each side (1A,1B) of the support (6), the base member wider than the rib.

8. A screen assembly as claimed in Claim 6 or 7 wherein the support (6) has two spaced-apart ends (32), and the base members (28) are substantially parallel to the two spaced-apart ends (6).

9. A screen assembly as claimed in any preceding claim, wherein the at least one layer of screening material (M,N) is a plurality of layers of screening material.

10. A screen assembly as claimed in any preceding claim further comprising a perforate plate (P) on the support (6), and the at least one layer of screening material (M,N) on the perforate plate (P).

11. A screen assembly as claimed in any preceding claim, wherein the support (6) of composite material comprises one of: 35% to 40% NYLON 66 (Trademark) material and 60% to 65% glass reinforcing material; 6,6 NYLON (Trademark) material and 60% to 65% glass reinforcing material; 35% to 40% NYLON 66 (Trademark) material and 60% to 65% glass reinforcing material and at least one mineral; and polyphenylene sulphide and carbon fibres.

12. A shale shaker for separating solids from solids laden drilling fluid, the shale shaker comprising a screen assembly as claimed in any preceding claim.

13. A method for separating solids from a solids laden fluid with a vibratory separator, the method comprising the steps of introducing solids laden fluid to the vibratory separator, the vibratory separator having a base, a basket, at least one screen assembly connected to the basket, vibration apparatus for vibrating the basket and the at least one screen assembly, said at least one screen assembly comprising a support and at least one layer of screening material on the support, the support made of composite material, the support having a top and a bottom and a plurality of holes therethrough from top to bottom through which material is passable, the holes defined by structure of the support, the structure defining said holes having a top and a bottom and tapering therebetween to define tapering holes and vibrating the screen assembly to separate solids from the solids laden fluid, whereupon the at least the fluid element passes through the at least one layer of screening material and the tapering holes.

14. A method in accordance with Claim 13, wherein the structure defining said holes is narrower at said top than at said bottom of the support.

15. A method in accordance with Claim 13, wherein the structure defining the holes is narrower at the bottom than at the top of the support.

## Patentansprüche

1. Siebanordnung zur Verwerdung in einer Vibrationstrennvorrichtung zum Sieben eines feststoffbeladenen Fluids, wobei die Siebanordnung einen Träger (6), der aus einem Kompositmaterial gemacht ist, und mindestens eine Schicht aus Siebmaterial (M, N) auf dem Träger umfasst, wobei der Träger (6) eine Oberseite und eine Unterseite und von der Oberseite zu der Unterseite eine Vielzahl von Löchern (5) hindurch hat, durch die Fluid passieren kann, wobei die Löcher (5) durch die Struktur von dem Träger (6) definiert sind, **dadurch gekennzeichnet, dass** die Struktur, die die Löcher (5) definiert, sich wischen der Oberseite und der Unterseite von dem Träger (6) verjüngt.

2. Siebanordnung nach Anspruch 1, wobei mindestens eines von den Löchern von der Vielzahl von Löchern (5) in der Draufsicht eine Form hat, die: quadratisch, rechteckig, trapezförmig, sechseckig, dreieckig oder diamantförmig ist.

3. Siebanordnung nach Anspruch 1 oder 2, wobei die Struktur, die die Löcher (5) definiert, an der Oberseite von dem Träger (6) enger ist als an der Unterseite davon.

4. Siebanordnung nach Anspruch 1 oder 2, wobei die Struktur, die die Löcher (5) definiert, an der Unterseite von dem Träger (6) enger ist als an der Oberseite davon.

5. Siebanordnung nach einem der vorhergehenden Ansprüche, wobei der Träger (6) zwei in Abständen zueinander angeordnete Seiten (1A, 1 B) hat, wobei vorzugsweise jede Seite von den zwei in Abständen zueinander angeordneten Seiten (1A, 1 B) eine Abfolge von in Abständen zueinander angeordneten Rippen (2) hat und wobei vorteilhafterweise die besagte Ecke in Richtung von einer Seite (1A, 1 B) von dem Träger (6) zeigt.

6. Siebanordnung nach einem der vorhergehenden Ansprüche, ferner umfassend mindestens ein Basisteil (28) an einer Unterseite von der Struktur, die die Löcher (5) definiert, wobei das Basisteil (28) breiter als die Unterseite von der Struktur ist, die die Löcher (5) definiert.

7. Siebanordnung nach Anspruch 6 in Kombination mit Anspruch 3, wobei das mindestens eine Basisteil (28) sich unter einer Rippe (2) auf jeder Seite (1A, 1 B) von dem Träger (6) erstreckt, wobei das Basisteil breiter als die Rippe ist.

8. Siebanordnung nach Anspruch 6 oder 7, wobei der Träger (6) zwei in Abständen zueinander angeordnete Enden (32) hat und die Basisteile (28) im Wesentlichen parallel zu den zwei in Abständen zueinander angeordneten Enden (6) sind.

9. Siebanordnung nach einem der vorhergehenden Ansprüche, wobei die mindestens eine Schicht aus Siebmaterial (M, N) eine Vielzahl von Schichten aus Siebmaterial ist.

10. Siebanordnung nach einem der vorhergehenden Ansprüche, ferner umfassend auf dem Träger (6) eine perforierte Platte (P) und auf der perforierten Platte (P) die mindestens eine Schicht aus Siebmaterial (M, N).

11. Siebanordnung nach einem der vorhergehenden Ansprüche, wobei der Träger (6) aus Kompositmaterial mindestens eines umfasst, ausgewählt aus: 35 % bis 40 % NYLON 66 (Marke) -Material und 60 % bis 65 % Glasverstärkunasmaterial; 6,6 NYLON (Marke) -Material und 60 % bis 65 % Glasverstärkungsmaterial; 35 % bis 40 % NYLON 66 (Marke) -Material und 60 % bis 65 % Glasverstärkungsmaterial und mindestens ein Mineral; und Polyphenylensulphid und Kohlefasern.

12. Schieferschüttelvorrichtung zum Trennen von Feststoffen aus feststoffbeladenem Bohrungsfluid, wobei die Schieferschüttelvorrichtung eine Siebanordnung nach einem der vorhergehenden Ansprüche umfasst.

13. Verfahren zum Trennen von Feststoffen aus einem feststoffbeladenem Fluid mit einer Vibrationstrennvorrichtung, wobei das Verfahren den Schritt des Zuführens von feststoffbeladenem Fluid zu der Vibrationstrennvorrichtung umfasst, wobei die Vibrationstrennvorrichtung eine Basis, einen Korb, mindestens eine mit dem Korb verbundene Siebanordnung, einen Vibrationsapparat zum Vibrieren des Korbs und die mindestens eine Siebanordnung hat, wobei die mindestens eine Siebanordnung einen Träger und mindestens eine Schicht aus Siebmaterial auf dem Träger umfasst, wobei der Träger aus Kompositmaterial gemacht ist und wobei der Träger eine Oberseite und eine Unterseite und von der Oberseite zu der Unterseite eine Vielzahl Löchern hindurch hat, durch die Material passieren kann, wobei die Löcher durch die Struktur von dem Träger definiert sind, wobei die Struktur, die die Löcher definiert, eine Oberseite und eine Unterseite hat und sich dazwischen verjüngt, um sich verjüngende Löcher zu definieren, und den Schritt des Vibrierens von der Siebanordnung umfasst, um die Feststoffe aus dem feststoffbeladenem Fluid zu trennen, woraufhin mindestens das Fluidelement durch die mindestens eine Schicht aus Siebmaterial und die sich verjüngenden Löcher passiert.

14. Verfahren nach Anspruch 13, wobei die Struktur, die die Löcher definiert, an der Oberseite von dem Träger enger ist als an der Unterseite davon.

15. Verfahren nach Anspruch 13, wobei die Struktur, die die Löcher definiert, an der Unterseite von dem Träger enger ist als an der Oberseite davon.

## Revendications

1. Ensemble de criblage destiné à être utilisé dans un séparateur vibratoire pour cribler un fluide chargé de matières solides, l'ensemhle de criblage comportant un support (6) constitué d'un matériau composite et au moins une couche de matériau de criblage (M, N) sur ledit support, ledit support (6) présentant une partie supérieure et une partie inférieure et une pluralité de trous (5) de passage pour passer de ladite partie supérieure à la partie inférieure à travers lesquels le fluide peut passer, lesdits trous (5) étant définis par la structure du support (6), **caractérisé en ce que** ladite structure définissant lesdits trous (5) prend une forme conique entre ladite partie supérieure et ladite partie inférieure dudit support (6).

2. Ensemble de criblage selon la revendication 1, dans lequel l'au moins un des trous de ladite pluralité de trous (5) présente une configuration, dans une vue en plan, en forme de : carré, rectangle, trapèze, hexagone, triangle et losange.

3. Ensemble de criblage selon la revendication 1 ou 2, dans lequel ladite structure définissant lesdits trous (5) est plus étroite au niveau de ladite partie supérieure qu'au niveau de ladite partie inférieure du support (6).

4. Ensemble de criblage selon la revendication 1 ou 2, dans lequel la structure définissant les trous (5) est plus étroite au niveau de ladite partie inférieure qu'au niveau de ladite partie supérieure du support (6).

5. Ensemble de criblage selon l'une quelconque des revendications précédentes, dans lequel le support (6) présente deux côtés séparés l'un de l'autre (1A, 1B), de préférence, chaque côté des deux côtés séparés l'un de l'autre (1A, 1B) présentant une série de nervures séparées les unes des autres (2) de façon avantageuse, ledit sommet pointant vers un côté (1A, 1B) du support (6).

6. Ensemble de criblage selon l'une quelconque des revendications précédentes, comprenant de plus au moins un élément de base (28) au niveau de la partie inférieure de la structure définissant les trous (5), ledit élément de base (28) étant plus large que la partie inférieure de la structure définissant les trous (5).

7. Ensemble de criblage selon la revendication 6 en combinaison avec la revendication 3, dans lequel l'élément ou les éléments de base (28) s'étend ou s'étendent sous une nervure (2) sur chaque côté (1A, 1B) du support (6), l'élément de base étant plus large que la nervure.

8. Ensemble de criblage selon la revendication 6 ou 7, dans lequel le support (6) présente deux extrémités séparées l'une de l'autre (32), et dans lequel les éléments de base (28) sont essentiellement parallèles aux deux extrémités séparées l'une de l'autre (32).

9. Ensemble de criblage selon l'une quelconque des revendications précédentes dans lequel l'au moins une couche de matériau de criblage (M, N) est une pluralité de couches de matériau de criblage.

10. Ensemble de criblage selon l'une quelconque des revendications précédentes, comportant de plus une plaque perforée (P) sur le support (6), et dans lequel l'au moins une couche de matériau de criblage (M, N) se trouve sur la plaque perforée (P).

11. Ensemble de criblage selon l'une quelconque des revendications précédentes, dans lequel le support (6) de matériau composite comprend l'un parmi : de 35% à 40% de matériau de NYLON 66 (Marque déposée) et de 60% à 65% de matériau de renforcement de verre ; du matériau de NYLON 6,6 (Marque déposée) et de 60% à 65% de matériau de renforcement de verre ; de 35% à 40% de matériau de NYLON 66 (Marque déposée) et de 60% à 65% de matériau de renforcement de verre et au moins un minéral ; et sulfure de polyphénylène et fibres de carbone.

12. Tamis vibrant pour séparer des matières solides à partir d'un fluide de forage chargé de matières solides, le tamis vibrant comportant un ensemble de criblage selon l'une quelconque des revendications précédentes.

13. Procédé permettant de séparer des matières solides à partir d'un fluide chargé de matières solides, avec un séparateur vibratoire, le procédé comportant les étapes comprenant le fait d'introduire un fluide chargé de matières solides dans le séparateur vibratoire, le séparateur vibratoire comportant une base, un panier, au moins un ensemble de criblage raccordé au panier, un appareil produisant des vibrations pour faire vibrer le panier et l'ensemble ou les ensembles de criblage, ledit au moins un ensemble de criblage comportant un support et au moins une couche de matériau de criblage sur le support, le support étant constitué d'un matériau composite, le support présentant une partie supérieure et une partie inférieure et une pluralité de trous de passage allant de la partie supérieure jusqu'à la partie inférieure à travers lesquels le matériau peut passer, les trous étant définis par la structure du support, la structure définissant lesdits trous présentant une partie supérieure et une partie inférieure et prenant une forme conique entre elles afin de définir des trous de forme conique et de faire vibrer l'ensemble de criblage pour séparer les matières solides du fluide chargé en matières solides, à la suite de quoi l'élément ou les éléments fluide(s) passe(nt) à travers la, au moins une, couche de matériau de criblage et les trous coniques.

14. Procédé selon la revendication 13, dans lequel la structure définissant lesdits trous est plus étroite au niveau de ladite partie supérieure qu'au niveau de ladite partie inférieure du support.

15. Procédé selon la revendication 13, dans lequel la structure définissant les trous est plus étroite au niveau de la partie inférieure qu'au niveau de la partie supérieure du support.
